# EUROPÄISCHE PATENTSCHRIFT

(11) **EP 2 220 860 B1**
(45) Veröffentlichungstag und Bekanntmachung des Hinweises auf die Patenterteilung: **27.04.2011**
(21) Anmeldenummer: 09779915.9
(22) Anmeldetag: 24.06.2009
(51) Int. Cl.: H04M 7/12, H04M 3/42

(54) **VERFAHREN ZUM NUTZEN VON SPRACHANSAGEN IN TELEKOMMUNIKATIONSVERBINDUNGEN**
METHOD FOR USING VOICE MESSAGES IN TELECOMMUNICATIONS CONNECTIONS
PROCÉDÉ D'UTILISATION DE MESSAGES D'ANNONCE DANS DES LIAISONS DE TÉLÉCOMMUNICATION

(30) Priorität: 24.07.2008 DE 102008035033
(43) Veröffentlichungstag der Anmeldung: 25.08.2010
(73) Patentinhaber: Teles AG Informationstechnologien, 10587 Berlin (DE)
(72) Erfinder: PAETSCH, Frank, 12357 Berlin (DE); GADOW, Ivo, 10247 Berlin (DE)
(74) Vertreter: Müller, Wolfram Hubertus
(86) Internationale Anmeldenummer: PCT/EP2009/057867
(87) Internationale Veröffentlichungsnummer: WO 2010/009949

(56) Entgegenhaltungen:
- WO-A-03/067443
- US-A1- 2003 021 394

## Beschreibung

Die Erfindung betrifft ein Verfahren zum Nutzen von Sprachansagen in Telekommunikationsverbindungen (TK-Verbindungen) und ein Gateway zur Durchführung eines solchen Verfahrens.

### Hintergrund der Erfindung

Gateways mit der Funktionalität, Sprachansagen von Teilnehmern zu erkennen, sind bekannt aus WO03/067443 A1.

Gateways dienen als Schnittstelle zwischen unterschiedlichen Netzwerktypen und stellen einen Netzübergang bereit. Ein Beispiel für ein Gateway ist ein VoIP-Gateway, das einen Netzübergang zwischen einem IP-basierten, paketorientierten Kommunikationsnetz, beispielsweise dem Internet oder einem NGN (Next Generation Network), und einem leitungsvermittelten Kommunikationsnetz, beispielsweise Telekommunikations-Festnetz wie dem ISDN bereitstellt.

Ein anderes Beispiel für ein Gateway ist ein so genanntes Mobilfunk-Gateway, das eine Schnittstelle zwischen einem oder mehreren Telekommunikations-Mobilfunknetzen und beliebigen anderen Netzen, beispielsweise einem Telekommunikations-Festnetz oder einem IP-Netz bereitstellen. Ein Mobilfunk-Gateway wird von dem Nutzer eines anderen Netzes angerufen und leitet die gewünschte Verbindung über einen Mobilfunkkanal in das Mobilfunknetz weiter, in dem sich der gerufene Teilnehmer befindet. Hierzu implementiert das Mobilfunk-Gateway die Funktionalität eines Mobilfunktelefons und ruft gewissermaßen als Mobilfunktelefon den gerufenen Teilnehmer an. Mobilfunk-Gateways verfügen somit über die gleichen Mobilfunkmodule, wie sie in Mobilfunkendgeräten (Handys) zum Einsatz kommen. Derartige Mobilfunk-Gateways sind beispielsweise aus der DE 103 14 144 A1 bekannt.

Dabei ist bekannt, dass das Mobilfunk-Gateway eine Vielzahl von Einsteckkarten, insbesondere so genannte SIM-Karten für die verwalteten Mobilfunkkanäle enthält. Es können beliebige SIM-Karten verschiedener Netzbetreiber eingesetzt werden. Eine SIM-Karte ist eine Einsteckkarte mit einer Kennung, über die ein Mobilfunkgerät einem bestimmten Netzbetreiber zugeordnet wird, eine bestimmte Rufnummer erhält und in allen Mobilfunknetzen eindeutig identifizierbar ist. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunkendgerät hinsichtlich des Nutzers und hinsichtlich des Netzbetreibers und ermöglicht die Abrechnung von Gesprächsgebühren von dem Netzbetreiber.

Es ist weiter bekannt, dass ein Kommunikationsnetz für den Fall, dass Probleme bei der Herstellung einer Kommunikationsverbindung entstehen, beispielsweise weil der gerufene Endteilnehmer nicht existiert, das Netz überlastet oder ein monetäres Guthabenvolumen des rufenden Teilnehmers aufgebraucht ist, eine typisierte Sprachinformation erzeugt, die dem rufenden Teilnehmer einer gewünschten Kommunikationsverbindung zu Informationszwecken übermittelt wird. Beispiele für eine solche typisierte Sprachansage sind "Teilnehmer nicht erreichbar", "Rufnummer hat sich geändert" oder "Kein Guthaben mehr vorhanden". Eine solche typisierte Sprachansage wird in der Regel durch ein Computersystem generiert oder ist zuvor aufgezeichnet worden.

Der vorliegenden Erfindung liegt die Aufgabe zugrunde, ein Verfahren zum Nutzen von Sprachansagen in Telekommunikationsverbindungen zur Verfügung zu stellen. Des Weiteren soll ein Gateway zur Durchführung eines solchen Verfahrens bereitgestellt werden.

### Zusammenfassung der Erfindung

Diese Aufgabe wird erfindungsgemäß durch ein Verfahren mit den Merkmalen des Anspruchs 1 und ein Gateway mit den Merkmalen des Anspruchs 12 gelöst. Beispielhafte Ausgestaltungen der Erfindung sind in den Unteransprüchen angegeben.

Danach sieht das erfindungsgemäße Verfahren vor, dass in einem Gateway, das eine Schnittstelle zwischen zwei Kommunikationsnetzen bereitstellt, im Rahmen eines Verbindungsaufbaus oder einer Datenübertragung erzeugte typisierte Sprachansagen im Gateway erfasst und ausgewertet werden. Die Auswertung erfolgt dabei beispielsweise hinsichtlich der Pause-Ton-Informationen. In Abhängigkeit von der durchgeführten Auswertung nimmt das Gateway eine Aktion betreffend die betrachtete TK-Verbindung oder das Gateway insgesamt vor.

Das Gateway kann somit unterschiedliche Sprachansagen erkennen und nimmt in Abhängigkeit von der jeweiligen Sprachansage eine bestimmte Aktion vor. Beispiele für eine solche Aktion sind das Generieren einer Signalisierung und/oder das Aktivieren oder Deaktivieren einer Telekommunikations-Hardware und/oder -Software. Die erfindungsgemäße Lösung ermöglicht dabei, Probleme oder Fehler betreffend die aufzubauende oder durchgeschaltete TK-Verbindung frühzeitig zu erkennen und bereits im Gateway Gegenmaßnahmen einzuleiten, die dem gewünschten Verbindungsaufbau oder der gewünschten Datenübertragung förderlich sind.

Eine typisierte Sprachansage im Sinne der vorliegenden Erfindung ist dabei eine Sprachansage, die sich durch definierte Werte hinsichtlich Wortanzahl, Wortlänge und Abstand zwischen den einzelnen Wörtern auszeichnet. Nicht typisierte Sprachinformationen, etwa solche eines Telefongesprächs zwischen natürlichen Personen, sind keine Sprachansagen im Sinne dieser Beschreibung. Eine Sprachansage der in dieser Erfindung betrachteten Art ist üblicherweise dafür vorgesehen, an das rufende Endsystem übermittelt zu werden.

In einer Ausgestaltung der Erfindung erfolgt die Auswertung einer Sprachansage hinsichtlich ihrer Pause-Ton-Informationen, wobei eine Mustererkennung in dem Sinne erfolgt, dass die Länge der einzelnen Wörter und/oder die Länge der Pausen zwischen den einzelnen Wörtern und/oder die Anzahl der einzelnen Wörter der Sprachansage erfasst werden. Grundsätzlich kann jedoch auch eine aufwendigere Spracherkennung durchgeführt werden, die dann allerdings sowohl wesentlich mehr Prozessorleistung als auch Trainingsfrequenzen erfordert.

Pause-Ton-Informationen im Sinne der vorliegenden Erfindung sind dabei insbesondere Informationen zu der Anzahl der Wörter einer Sprachansage, der Länge der einzelnen Wörter der Sprachansage und der Länge der Pausen zwischen den jeweiligen Wörtern. Die Pause-Ton-Information stellt dabei ein Muster bereit, das durch den Gateway bei der Sprachansagenanalyse erkannt wird. Dieses Muster kann mit zuvor festgelegten Mustern verglichen werden, die beispielsweise ein Anwender zuvor konfiguriert hat oder die gespeichert sind. Diesen Mustern ist dabei jeweils eine bestimmte Aktion zugeordnet. Nach Erfassen der Pause-Ton-Informationen einer Sprachansage und Erkennen des Musters dieser Sprachansage wird das erkannte Muster mit den zuvor konfigurierten oder gespeicherten Mustern verglichen und dann diejenige Aktion ausgeführt, die dem mit dem aktuellen Muster übereinstimmenden Muster zugeordnet ist.

Das Erfassen einer Sprachansage umfasst in einer Ausgestaltung eine Prüfung, ob es sich bei den übertragenen Sprachdaten überhaupt um eine Sprachansage handelt oder nicht. Diese Prüfung kann implizit erfolgen. Wenn beispielsweise der erfassten Sprachansage ein Muster zuordenbar ist, das mit einem zuvor konfigurierten oder gespeicherten Muster übereinstimmt, so kann festgelegt werden, dass es sich dann auch um eine Sprachansage handelt. Ebenso ist es möglich, Zusatzinformationen hierzu auszuwerten. Beispielsweise kann vorgesehen sein, dass das Übersenden einer Sprachansage mit einer bestimmten Signalisierung (Innenband- oder Außenbandsignalisierung) einhergeht, die vom Gateway erkannt wird.

In einer Ausgestaltung betrifft die durch das Gateway vorgenommene Aktion ein geändertes Routing des Verbindungsaufbaus oder der Daten der TK-Verbindung. Beispielsweise werden Signalisierungsdaten zum Aufbau einer alternativen analogen Kanals oder ISDN Kanals ausgesandt. In einer anderen Ausgestaltung betrifft die durch das Gateway vorgenommene Aktion das Aktivieren oder Deaktivieren von Telekommunikations-Hardware- und/oder -Software, die zum Verbindungsaufbau und/oder zur Datenübertragung zu dem gerufenen Endsystem genutzt wird. Ein Beispiel hierfür ist das Sperren einer Einsteckkarte (z.B. SIM-Karte) und/oder das Wechseln einer Einsteckkarte und/oder das Aufladen einer Einsteckkarte bei einem Mobilfunk-Gateway.

Eine Sprachansage kann in vielfacher Weise generiert sein und unterschiedlichste Informationen enthalten. Beispiele für die enthaltenen Informationen sind Informationen über das gerufene Endsystem, Informationen über das zweite Kommunikationsnetz oder Informationen über Guthaben und/oder Kosten. Die Generierung einer Sprachansage kann beispielsweise durch das zweite Kommunikationsnetz (oder ein mit diesem gekoppeltes weiteres Kommunikationsnetz) oder durch das gerufene Endsystem erfolgen.

In einer weiteren Ausgestaltung ist vorgesehen, dass das Mobilfunk-Gateway ein Weiterleiten der erfassten Sprachansage zum rufenden Endsystem blockiert. Dies kann sinnvoll sein, wenn die Ursache, die zur Generierung der Sprachansage führte, durch die ausgeführte Aktion des Gateways bereits beseitigt ist. Dabei kann vorgesehen sein, dass die Sprachansage im Gateway zunächst zwischengespeichert und nur dann weitergeleitet wird, nachdem eine interne Steuerung entschieden hat, dass dies erfolgen soll.

In einem weiteren Ausführungsbeispiel wertet das Gateway des weiteren Signalisierungsinformationen aus, die es im Rahmen einer Außenband-Signalisierung oder Innenband-Signalisierung erfasst. Diese Signalisierungsinformationen betreffen die Sprachansage. Es kann vorgesehen sein, dass Informationen einer Außenband-Signalisierung oder Innenband-Signalisierung zum Erkennen einer Sprachansage genutzt werden, also dafür zu Erkennen, ob eine Sprachansage überhaupt vorliegt. Des weiteren kann vorgesehen sein, dass Informationen einer Außenband-Signalisierung oder Innenband-Signalisierung zum Auswerten einer Sprachansage genutzt werden, also dafür, die Sprachansage einer Aktion zuzuordnen. Dabei wird das erfasste Muster zusammen mit den Signalisierungsinformationen weiter ausgewertet.

In einem Ausführungsbeispiel sind das Gateway ein VoIP-Gateway und das erste Kommunikationsnetz ein IP-Netz. Das VoIP-Gateway wird beispielsweise für VoIP-Telefonie über das Internet genutzt und stellt eine Schnittstelle zwischen dem Internet und einem Telekommunikations-Festnetz oder -Mobilfunknetz bereit.

In einer anderen Ausführungsvariante sind das Gateway ein Mobilfunk-Gateway und das zweite Kommunikationsnetz ein Mobilfunknetz, wobei das Mobilfunk-Gateway eine Mehrzahl von Funkmodulen für die Mobilkommunikation aufweist und dem Mobilfunk-Gateway eine Mehrzahl von mit einer Kennung versehener Einsteckkarten zugeordnet oder zuordenbar ist, die jeweils eine Nutzung eines Funkmoduls für die Mobilkommunikation ermöglichen. Ein Sprachansage kann dabei beispielsweise Informationen über den Status einer im Mobilfunk-Gateway enthaltenen oder diesem zugeordneten Einsteckkarte oder Informationen über ein Guthaben einer Einsteckkarte betreffen.

Eine typisierte Sprachansage, die dafür vorgesehen ist, an das rufende Endsystem übermittelt zu werden, wird beispielsweise durch ein Telekommunikationsgerät oder durch ein Telekommunikationsnetz generiert. So wird eine typisierte Sprachansage beispielsweise durch ein Computersystem eines Telekommunikationsnetzes automatisch generiert, mit dem das gerufene Endsystem verbunden ist, oder durch ein Telekommunikationsgerät des gerufenen Endsystems.

Die Erfindung betrifft auch ein Gateway, dass zur Durchführung des Verfahrens nach Anspruch 1 geeignet ist. Dieses weist Mittel zum Auswerten einer typisierten Sprachansage, die dafür vorgesehen ist, an ein rufendes Endsystem übermittelt zu werden, und Mittel zur Vornahme einer eine TK-Verbindung oder das Gateway betreffenden Aktion in Abhängigkeit von der durchgeführten Auswertung auf.

Die Mittel zum Auswerten einer typisierten Sprachansage nehmen in einer Ausgestaltung eine Mustererkennung in dem Sinne vor, als die Länge der einzelnen Wörter und/oder die Länge der Pausen zwischen den einzelnen Wörtern und/oder die Anzahl der einzelnen Wörter der Sprachansage erfasst werden. Die Mittel zum Auswerten einer Sprachansage und die Mittel zur Vornahme einer Aktion sind beispielsweise als Softwaremodule ausgebildet, die Teil einer Steuerung des Gateways sind.

### Die Beschreibung von Ausführunasbeispielen der Erfindung

Die Erfindung wird nachfolgend unter Bezugnahme auf die Figuren der Zeichnung anhand mehrerer Ausführungsbeispiele näher erläutert. Es zeigen:
- Fig. 1: schematisch eine erste Telekommunikationsanordnung mit einem Gateway, das zur Realisierung des erfindungsgemäßen Verfahrens geeignet ist; und
- Fig. 2: ein zweites Ausführungsbeispiel einer Telekommunikationsanordnung, die zur Realisierung des erfindungsgemäßen Verfahrens geeignet ist, wobei das Gateway als Mobilfunk-Gateway ausgeführt ist.

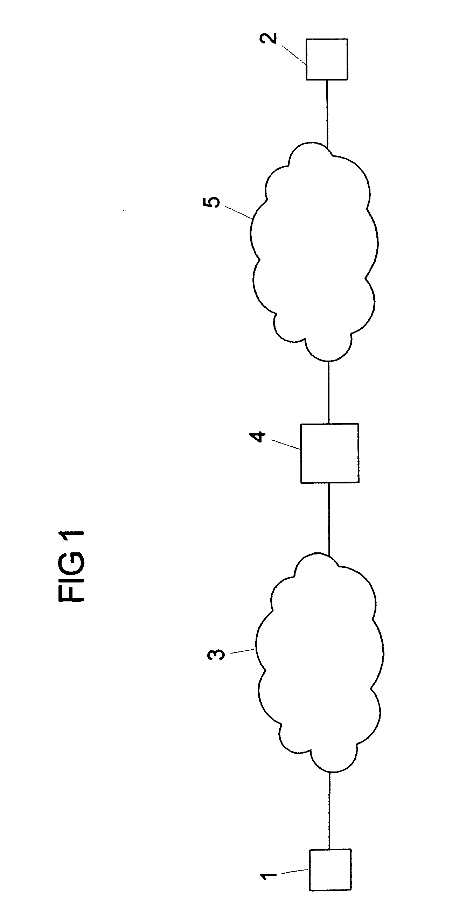

Die Fig. 1 zeigt eine Telekommunikationsanordnung, die den Aufbau und die Aufrechterhaltung einer TK-Verbindung zwischen einem rufenden Endsystem 1 und einem gerufenen Endsystem 2 ermöglicht. Bei dem rufenden Endsystem 1 handelt es sich beispielsweise um ein Telekommunikations-Endgerät (TK-Endgerät), z. B. um ein Festnetz-Telefon, ein IP-Telefon, ein Mobilfunk-Telefon, einen Computer mit einer Telefonie-Software, einen Handheld, ein WLAN-fähiges Endgerät, etc. Es kann sich bei dem Endsystem 1 jedoch ebenfalls um ein lokales Netz oder eine TK-Anlage (PBX) handeln, an die eine Vielzahl von TK-Endgeräten angeschlossen sind. Gleiches gilt für das gerufene Endsystem 2. Im Folgenden wird beispielhaft davon ausgegangen, dass es sich sowohl bei dem rufenden Endsystem als auch bei dem gerufenen Endsystem jeweils um ein TK-Endgerät handelt.

Das rufende Endgerät 1 ist über mindestens ein erstes Kommunikationsnetz 3 mit einem Gateway 4 verbunden. Das Gateway 4 stellt eine Schnittstelle zwischen dem ersten Kommunikationsnetz 3 und einem zweiten Kommunikationsnetz 5 bereit, an das das gerufene Endgerät 2 angeschlossen ist.

Bei dem ersten und zweiten Kommunikationsnetz 3, 5 kann es sich grundsätzlich um ein beliebiges Kommunikationsnetz handeln. Beispiele sind jeweils ein leitungsvermitteltes Netz, beispielsweise ein Telekommunikations-Festnetz wie das ISDN (Integrated Services Digital Network) oder PSTN (Public Switched Telephone Network), ein Mobilfunknetz, ein WLAN oder ein paketvermitteltes Netz wie beispielsweise ein IP-Netz wie das Internet oder ein NGN. Auch wird darauf hingewiesen, dass die Verbindung zwischen dem rufenden Endgerät 1 und dem Gateway 4 einerseits und zwischen dem Gateway 4 und dem gerufenen Endgerät 2 andererseits über mehr als ein Netz erfolgen kann, die miteinander gekoppelt sind, beispielsweise unter Verwendung weiterer Gateways oder mittels Interconnect-Anschlüssen. Der Einfachheit halber sind in der Fig. 1 jeweils nur 1 Kommunikationsnetz 3, 5 zwischen dem rufenden Endgerät 1 und dem Gateway 4 sowie zwischen dem Gateway 4 und dem gerufenen Endgerät 2 dargestellt.

Es ist nun denkbar, dass während des Verbindungsaufbaus oder während eines durchgeschalteten Gespräches ein Problem in Bezug auf den Verbindungsaufbau oder die Datenübertragung der durchgeschalteten Verbindung auftritt. Beispielsweise existiert zu der gerufenen Telefonnummer ein Endgerät. Ein anderes Beispiel für ein auftretendes Problem ist eine Überlastung des zweiten TK-Netzes 5. Auch kann das Problem auftreten, dass der rufende Teilnehmer die Kosten der TK-Verbindung durch eine so genannte Prepaid-Karte, die ein monetäres Guthaben aufweist, tragen will, das Guthaben jedoch bereits aufgebraucht oder unterhalb des Betrages liegt, der für die gewünschte Kommunikationsverbindung erforderlich ist. In solchen Fällen ist es grundsätzlich bekannt, dass eine typisierte Sprachinformation erzeugt wird. Eine solche typisierte Sprachinformation kann beispielsweise durch das gerufene Endgerät 2 oder das Kommunikationsnetz 5, das die TK-Verbindung zum gerufenen Endgerät terminiert, oder ein Netz, das mit einem solchen terminierenden Kommunikationsnetz 5 verbunden ist, erfolgen. Beispiele für solche typisierten Sprachansagen sind "Teilnehmer nicht erreichbar", "Rufnummer hat sich geändert" oder "kein Guthaben mehr vorhanden".

Eine solche typisierte Sprachansage - im folgenden als Sprachansage bezeichnet - wird von ihrem Erzeuger an das Gateway 4 übersandt, damit das Gateway 4 sie zur Information des rufenden Endgerätes 1 bzw. dessen Nutzers an dieses weiterleiten kann.

Hierauf baut nun die vorliegende Erfindung auf. Hierzu erfolgt zunächst ein Erkennen und Erfassen der typisierten Sprachansage, im Folgenden als Sprachansage bezeichnet, im Gateway 4. Das Gateway weist hierzu Mittel zum Auswerten einer Sprachansage auf, die die Sprachansage hinsichtlich der Pause-Ton-Informationen analysieren. Solche Mittel werden beispielsweise durch ein Softwaremodul bereitgestellt. Zur Analyse der Pause-Ton-Informationen nimmt das entsprechende Modul des Gateways eine Mustererkennung vor in dem Sinne, als die Länge der einzelnen Wörter der Sprachansage, die Länge der Pause zwischen den einzelnen Wörter der Sprachansage und/oder die Anzahl der einzelnen Wörter der Sprachansage erfasst werden. Dabei ist zu beachten, dass typisierte Sprachansagen sich jeweils durch eine exakte Identität hinsichtlich Wortanzahl, Wortlänge und der Pause zwischen den einzelnen Wörtern auszeichnet. Über die genannte Mustererkennung kann daher eine Identifizierung der Sprachansage erfolgen.

Die Mittel zum Auswerten der Sprachansage vergleichen, nachdem eine Mustererkennung vorgenommen wurde, das bekannte Muster des weiteren mit zuvor gespeicherten oder konfigurierten Mustern, wobei jedem vorkonfigurierten Muster mindestens eine durchzuführende Aktion zugeordnet ist. Über die Mustererkennung wird also eine bestimmte Aktion definiert.

Nach dieser Analyse führt das Gateway 4 die dem erkannten Muster zugeordnete Aktion durch. Die Art der Aktion kann dabei vielfältiger Natur sein. In einem Ausführungsbeispiel wird eine Signalisierung erzeugt, die ein alternatives Routing des Rufaufbaus oder der durchgeschalteten Verbindung zu dem gerufenen Endgerät 2 ermöglicht. In einem anderen Ausführungsbeispiel aktiviert oder deaktiviert das Gateway 4 Telekommunikations-Hardware und/oder -Software, die zum Verbindungsaufbau oder zur Datenübertragung zu dem gerufenen Endgerät 2 genutzt wird.

Das Gateway 4 kann, in Abhängigkeit von der Sprachansage und dem Problem, dass die Sprachansage impliziert, dabei Maßnahmen zur Behebung des Problems unternehmen und hierdurch einen sicheren Verbindungsaufbau oder die Aufrechterhaltung einer durchgeschalteten Verbindung gewährleisten.

Es wird darauf hingewiesen, dass die Mittel zum Auswerten der Sprachansage nicht notwendigerweise im Gateway selbst angeordnet sein müssen. Diese Mittel können auch in einer Vorrichtung implementiert sein, mit der das Gateway kommuniziert. Die Sprachansage muss jedoch zunächst im Gateway erfasst werden.

In einem beispielhaften Ausführungsbeispiel handelt es sich bei dem Kommunikationsnetz 3 um ein IP-Netz, beispielsweise das Internet, und bei dem Kommunikationsnetz 5 um ein Leitungsvermittlungsnetz, beispielsweise das Festnetz. Das Gateway 4 ist dabei als VoIP-Gateway ausgebildet. Ein Telefonanruf wird zunächst über das Paketvermittlungsnetz 3 zum Gateway 4 übertragen, wobei für die Datenübertragung keinerlei Kosten entstehen. Erst ab der Involvierung des leitungsvermittelten Netzes 5 für die Datenübertragung erzeugt die Kommunikationsverbindung Kosten. Typischerweise wird dabei für eine betrachtete TK-Verbindung ein Gateway 4 ausgewählt, der geografisch möglichst nahe des Endgerätes 2 lokalisiert ist, so dass die Involvierung des leitungsvermittelten Netzes 5 zum Rufaufbau und zur Datenübertragung minimiert ist.

Wenn nun eine Sprachansage erfolgt, beispielsweise dahingehend, dass ein gerufener Anschluss nicht erreichbar ist oder abgeschaltet wurde, ein vorhandenes Guthaben aufgebraucht ist oder eine Netzüberlastung vorliegt, wird die entsprechende Sprachansage am Gateway 4 erfasst, durch eine Mustererkennung ausgewertet und wird dann eine dem erfassten Muster zugeordnete Aktion durchgeführt. Die Aktion betrifft beispielsweise das Routen der Daten zurück durch das paketvermittelte Netz 3 zu einem anderen Gateway, die Aktivierung eines anderen analogen oder digitalen Kanals im Leitungsvermittlungsnetz 5, die Generierung eines Alarms, das Blockieren des Gateways 4 für eine weitere Datenübertragung, etc.

Dabei kann vorgesehen sein, dass das Gateway 4 die erhaltene Sprachansage nicht an das rufende Endgerät 1 weiterleitet. Dies ist insbesondere dann sinnvoll, wenn das durch die Sprachansage indizierte Problem durch die entsprechende Aktion des Gateways 4 beseitigt wird, so dass tatsächlich keine Notwendigkeit der Weiterleitung der Sprachansage an das rufende Endgerät 1 besteht. Dabei kann die Sprachansage zunächst im Gateway zwischengespeichert werden, bis klar ist, ob das Problem beseitigt werden kann oder nicht.

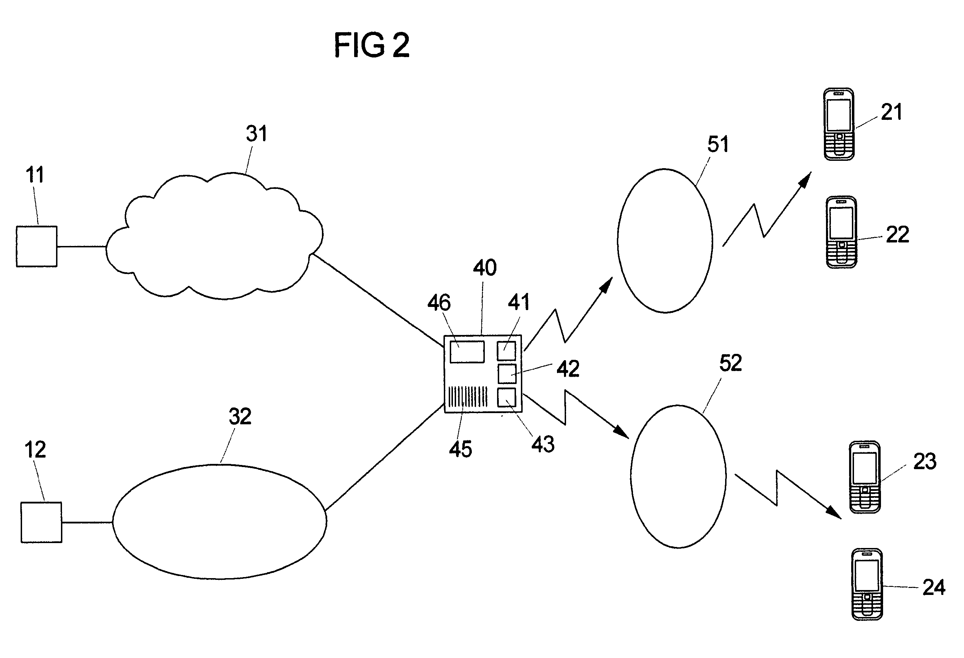

Figur 2 zeigt ein Ausführungsbeispiel einer Telekommunikations-Infrastruktur mit einem Gateway 40, das als Mobilfunk-Gateway ausgebildet ist.

Über das Mobilfunk-Gateway 40 kann eine Verbindung zwischen einem rufenden Endsystem 11, 12 und einem gerufenen Endsystem 21 bis 24, bei dem es sich um ein Mobilfunk-Endgerät handelt, vorgenommen werden. Beispielswiese wird ein von einem ersten TK-Endgerät 11 ausgehender Ruf über ein Paketvermittlungsnetz 31 zum Gateway 40 geroutet. Ein von einem zweiten TK-Endgerät 12 ausgehender Ruf wird beispielsweise über ein Leitungsvermittlungsnetz 32 zum Gateway 40 geroutet. Das Mobilfunk-Gateway 40 stellt einen Netzübergang zu mindestens einem Mobilfunknetz, im dargestellten Beispiel zu zwei Mobilfunknetzen 51, 52 bereit. Es handelt sich beispielsweise in Deutschland um die Netze T-Mobil, Vodafone, E-PLUS oder O₂.

Über das Mobilfunk-Gateway 40 kann jeweils ein Mobilfunk-Kanal und damit ein Ruf zu einem gerufenen Mobilfunk-Endgerät 21, 24 bereitgestellt werden. In das Mobilfunk-Gateway sind dabei eine Vielzahl von Mobilstationen integriert, die jeweils ein Funkmodul und eine SIM-Karte umfassen. Mehrere SIM-Karten 45 und Funkmodule 41, 42, 43 sind schematisch und beispielhaft in der Fig. 2 als Teile des Gateways 40 dargestellt. Die SIM-Karten 45 können dabei jeweils einem Funkmodul 41, 42, 43 fest zugeordnet sein. Ebenfalls kann vorgesehen sein, dass die SIM-Karten 45 einen Pool bilden, aus dem für eine konkrete Mobilfunkverbindung eine SIM-Karte jeweils einem Funkmodul zugeordnet wird.

Die SIM-Karten 45 können dabei in dem Mobilfunk-Gateway 40 entweder physisch selbst vorhanden sein, oder aber alternativ dort lediglich emuliert werden. Im letzteren Fall sind die physischen SIM-Karten in einem zentralen SIM-Server angeordnet (nicht dargestellt). Je nach Anforderung und Bedarf wird eine SIM-Karte seitens eines Mobilfunk-Gateways von dem SIM-Server angefordert und von diesem dem Mobilfunk-Gateway bereitgestellt. Das Bereitstellen einer SIM-Karte erfolgt dabei nicht physisch. Die Informationen, die eine SIM-Karte identifizieren und deren Funktionalität widerspiegeln, werden per Datenfernübertragung an das Mobilfunk-Gateway übertragen.

Natürlich können die SIM-Karten 45 jedoch auch im Gateway 40 selbst enthalten sein. Für die folgende Beschreibung kommt es nicht darauf an, wo die SIM-Karten 45 physisch angeordnet sind.

Ein eingehender Ruf, der das Mobilfunk-Gateway 40 über das Kommunikationsnetz 31 oder das Kommunikationsnetz 32 erreicht, wird über eine Steuerung 46, die im Gateway 40 selbst oder in einem externen Gerät angeordnet sein kann, einem der Funkmodule 41 bis 43 und einer SIM-Karte 45 zugeordnet. Dabei wird eine Mobilstation ausgewählt oder durch Bereitstellen einer geeigneten SIM-Karte bereitgestellt, bei der die SIM-Karte dem Mobilfunk-Netzbetreiber zugeordnet ist, dem auch das gerufene Endgerät 21-24 zugeordnet ist. Über die SIM-Karte 45 wird dabei der zu verwendende Mobilfunk-Kanal definiert. Das ausgewählte Funkmodul 41-43 mit der zugeordneten SIM-Karte realisiert nun einen Mobilfunk-Kanal zu dem gerufenen Mobilfunk-Endgerät, beispielsweise dem Mobilfunk-Endgerät 21. Das aktivierte Funkmodul ruft dabei unter Verwendung der zugeordneten SIM-Karte das Mobilfunk-Endgerät 21 an. Der Ruf wird dabei beispielsweise über eine Sende-Empfangsstation BTS (BTS = Base Transceiver Station), eine zugehörige Steuerungseinrichtung und weitere Netzinfrastruktur des involvierten Mobilfunk-Netzes 51 an das Mobilfunk-Endgerät 21 übertragen.

Es wird somit ein Mobilfunk-Kanal unter Verwendung einer SIM-Karte 45 bereitgestellt und - nach Beendigung des Rufaufbaus zu dem gerufenen Mobilfunk-Endgerät 21 und Durchschalten des Rufs - für die TK-Verbindung zum Mobilfunk-Endgerät 21 genutzt. Das Mobilfunk-Gateway 40 ruft dabei gewissermaßen als Mobilfunk-Telefon das Mobilfunk-Endgerät 21 an.

Der Aufbau eines Mobilfunk-Gateways ist beispielhaft in der EP 1 432 257 A1 beschrieben.

Es wird nun als Beispiel für ein mögliches Problem, das anhand einer typisierten Sprachansage dem Mobilfunk-Gateway 40 mitgeteilt wird, die Situation betrachtet, dass die für einen aktuellen Ruf verwendete SIM-Karte 45 des Mobilfunk-Gateways 40 kein Guthaben mehr besitzt (beispielsweise handelt es sich um eine Prepaid-SI M-Karte mit einem vorgegebenen Guthaben) oder die SIM-Karte aus irgendwelchen Gründen durch den Mobilfunk-Betreiber des entsprechenden Mobilfunk-Netzes gesperrt ist. Beim Rufaufbau vom Gateway 40 zum Endgerät 21 wird diese Tatsache dem rufenden Endgerät und damit dem Mobilfunk-Gateway 40 mittels einer Sprachansage mitgeteilt, die das involvierte Mobilfunknetz 51 auslöst. Dieses besitzt sämtliche Informationen zur Gültigkeit und Aktivierung sämtlicher SIM-Karten des Netzes.

Eine solche Sprachansage erkennt das Mobilfunk-Gateway 40 mittels eines entsprechenden Auswertmoduls, das Teil der Steuerung 46 sein kann. Beispielsweise wird der entsprechende Mobilfunk-Kanal überwacht. Dabei ist es bekannt, zu abgehenden Rufen eine so genannte Sprachaktivitätserkennung ("Voice-Activjty-Detection") vorzunehmen. Auch kann vorgesehen sein, dass Signalisierungsinformationen ausgewertet werden, die die Sprachansage eventuell begleiten.

Sofern eine Sprachansage vom Mobilfunk-Gateway 40 erkannt wird, nimmt das Mobilfunk-Gateway 40 eine Mustererkennung vor und analysiert die Sprachansage hinsichtlich ihrer charakteristischen Eigenschaften, insbesondere hinsichtlich der Längen der Pausen und Wörter und/oder der Anzahl der gesprochenen Wörter.

Beispielsweise enthält die Ansage "Teilnehmer nicht erreichbar" das Muster: 200ms Ton - 20ms Pause - 80 ms Ton - 20ms Pause - 300ms Ton und/oder 3 Wörter. Die Sprachansage "Ihr Guthaben ist aufgebraucht" entspricht dem Muster: 50ms Ton - 20ms Pause - 300ms Ton - 20ms Pause - 50ms Ton - 20ms Pause - 300ms Ton und/oder 4 Wörter.

Mit Hilfe einer vorgegebenen Mustertabelle, die beispielsweise durch ein Netzwerk-Management aktualisiert und/oder durch einen Anwender konfigurierbar ist, wird dem erkannten Muster eine bestimmte Aktion zugeordnet. Eine mögliche Aktion besteht dabei darin, dass der Ruf auf einen anderen Kanal geleitet und in Verbindung mit einer anderen SIM-Karte realisiert wird (Wechseln des Kanals). Auch kann vorgesehen sein, dass die gesperrte SIM-Karte durch eine nicht gesperrte SIM-Karte im Mobilfunk-Gateway 40 ersetzt wird. Da das aufgetretene Problem gelöst ist, ist es dabei sinnvoll, die Sprachansage im Mobilfunk-Gateway 40 zu blocken und nicht an den rufenden Teilnehmer 11, 12 durchzureichen. Es kann aber auch vorgesehen sein, die Sprachansage trotzdem durchzureichen.

Ein anderes Beispiel für eine durch das Mobilfunk-Gateway 40 durchzuführende Aktion im betrachteten Fall ist das Bereitstellen eines Guthaben für die entsprechende SIM-Karte, d. h. die gesperrte Karte wird aufgeladen und ist dann wieder verfügbar.

Die entsprechende Aktion wird beispielsweise durch ein Modul ausgeführt, das Teil der Steuerung 46 ist.

Selbstverständlich kann das Mobilfunk-Gateway 40 auch andere Maßnahmen durchführen in Abhängigkeit von der Sprachansage, die das Gateway 40 erfasst und analysiert. So kann für den Fall, dass die Sprachansage lautet: "Teilnehmer nicht erreichbar", durch das Gateway 40 an das leitungsvermittelte Netz 32 eine so genannte Cause-Meldung erzeugt werden. Solche sind im EURO-ISDN als typische Fehlermeldungen definiert. Es werden sowohl die Quelle der Fehlermeldung und auch die Meldungsursache angegeben. Das Gateway 40 nimmt insofern auf der Basis einer Sprachansage eine Übersetzung einer Fehlermeldung des Mobilfunk-Netzes 51 in eine entsprechende Fehlermeldung beispielsweise eines Leitungsvermittlungsnetzes wie des ISDN vor.

Die Erfindung ermöglicht das Herstellen eines Verbindungsaufbaus und das Aufrechterhalten einer durchgeschalteten Verbindung im Falle von auftretenden Fehlern, die mittels typisierter Sprachansagen identifiziert werden. Dabei wird durch die Auswertung der Sprachansage durch eine Art Mustererkennung die Notwendigkeit einer hohen Prozessorleistung und von Trainingssequenzen, wie sie bei Spracherkennungssystemen erforderlich sind, vermieden. Gleichzeitig kann das Gateway flexibel auf auftretende Fehler reagieren und die erforderlichen Aktionen initiieren, um den aufgetretenen Fehler selbst zu beheben und einen erfolgreichen Verbindungsaufbau oder ein Aufrechterhalten der durchgeschalteten Verbindung sicherstellen.

Die Erfindung beschränkt sich in ihrer Ausgestaltung nicht auf die vorstehend dargestellten Ausführungsbeispiele. Beispielsweise können statt eines VoIP-Gateways oder Mobilfunk-Gateways auch beliebige andere Gateways im Zusammenhang mit der Erfindung eingesetzt werden. Weiter sind beispielsweise die erwähnten Sprachansagen und die durch das Gateway in Reaktion auf diese ausgeführten Aktionen lediglich beispielhaft zu verstehen.

## Patentansprüche

1. Verfahren zum Nutzen von Sprachansagen in Telekommunikationsverbindungen, TK-Verbindungen, aufweisend:
- Routen eines Verbindungsaufbaus oder der Daten einer durchgeschalteten TK-Verbindung von einem rufenden Endsystem (1, 11, 12) über mindestens ein erstes Kommunikationsnetz (3, 31, 32) zu einem Gateway (4, 40), das eine Schnittstelle zwischen dem ersten Kommunikationsnetz (3, 31, 32) und einem zweiten Kommunikationsnetz (5, 51, 52) darstellt,
- Routen des Verbindungsaufbaus oder der Daten der durchgeschalteten TK-Verbindung von dem Gateway (4, 40) über mindestens das zweite Kommunikationsnetz (5, 51, 52) zu einem gerufenen Endsystem (2, 21-24),
- Erfassen einer die TK-Verbindung betreffenden typisierten Sprachansage, die dafür vorgesehen ist, an das rufende Endsystem (1, 11, 12) übermittelt zu werden, im Gateway (4, 40),
- Auswerten der typisierten Sprachansage hinsichtlich ihrer Pause-Ton-Informationen, wobei eine Mustererkennung in dem Sinne erfolgt, dass die Länge der einzelnen Wörter und/oder die Länge der Pausen zwischen den einzelnen Wörtern und/oder die Anzahl der einzelnen Wörter der Sprachansage erfasst werden, und
- Vornahme einer die TK-Verbindung oder das Gateway (4, 40) betreffenden Aktion durch das Gateway (4, 40) in Abhängigkeit von dem Ergebnis der durchgeführten Auswertung.

2. Verfahren nach Anspruch 1, **dadurch gekennzeichnet, dass** das erkannte Muster mit zuvor gespeicherten oder konfigurierten Mustern verglichen wird, wobei jedem gespeicherten oder vorkonfigurierten Muster mindestens eine durchzuführende Aktion zugeordnet ist und das Gateway (4, 40) in Abhängigkeit von dem erkannten Muster die entsprechende Aktion durchführt.

3. Verfahren nach einem der vorangehenden Ansprüche, **dadurch gekennzeichnet, dass** die durch das Gateway (4, 40) vorgenommene Aktion ein geändertes Routing des Verbindungsaufbaus oder der Daten der TK-Verbindung betrifft.

4. Verfahren nach einem der vorangehenden Ansprüche, **dadurch gekennzeichnet, dass** die durch das Gateway (4, 40) vorgenommene Aktion das Aussenden von Signalsierungsinformationen zum Verbindungsaufbau umfasst.

5. Verfahren nach einem der vorangehenden Ansprüche, **dadurch gekennzeichnet, dass** die durch das Gateway (4, 40) vorgenommene Aktion das Aktivieren oder Deaktivieren von Telekommunikations-Hardware- und/oder -Software umfasst, die zum Verbindungsaufbau und/oder zur Datenübertragung zu dem gerufenen Endsystem (5, 51, 52) genutzt wird.

6. Verfahren nach einem der vorangehenden Ansprüche, **dadurch gekennzeichnet, dass** das Gateway (4, 40) ein Weiterleiten der erfassten Sprachansage zum rufenden Endsystem (1, 11, 12) blockiert.

7. Verfahren nach einem der vorangehenden Ansprüche, **dadurch gekennzeichnet, dass** das Gateway (4) ein VoIP-Gateway und das erste Kommunikationsnetz ein IP-Netz (3) ist.

8. Verfahren nach einem der Ansprüche 1 bis 7, **dadurch gekennzeichnet, dass** das Gateway (40) ein Mobilfunk-Gateway und das zweite Kommunikationsnetz ein Mobilfunknetz (51, 52) ist, wobei das Mobilfunk-Gateway (40) eine Mehrzahl von Funkmodulen (41-43) für die Mobilkommunikation aufweist und dem Mobilfunk-Gateway (40) eine Mehrzahl von mit einer Kennung versehener Einsteckkarten (45) zugeordnet oder zuordenbar ist, die jeweils eine Nutzung eines Funkmoduls (41-43) für die Mobilkommunikation ermöglichen.

9. Verfahren nach Anspruch 8, **dadurch gekennzeichnet, dass** die Sprachansage Informationen über den Status einer im Mobilfunk-Gateway (40) enthaltenen oder diesem zugeordneten Einsteckkarte (45) umfasst.

10. Verfahren nach Anspruch 8 oder 9, **dadurch gekennzeichnet, dass** die vom Gateway (40) vorgenommene Aktion das Sperren einer Einsteckkarte (45) und/oder das Wechseln einer Einsteckkarte (45) und/oder das Aufladen einer Einsteckkarte (45) betrifft.

11. Verfahren nach einem der vorangehenden Ansprüche, **dadurch gekennzeichnet, dass** die typisierte Sprachansage durch ein Telekommunikationsgerät (2) und/oder durch ein Telekommunikationsnetz (5) generiert wird.

12. Gateway aufweisend:
- Mittel zum Auswerten einer typisierten Sprachansage, die dafür vorgesehen ist, an ein rufendes Endsystem (1, 11, 12) übermittelt zu werden, und
- Mittel zur Vornahme einer eine TK-Verbindung oder das Gateway (4, 40) betreffenden Aktion in Abhängigkeit von der durchgeführten Auswertung, wobei
- die Mittel zum Auswerten einer Sprachansage eine Mustererkennung in dem Sinne vornehmen, als die Länge der einzelnen Wörter und/oder die Länge der Pausen zwischen den einzelnen Wörtern und/oder die Anzahl der einzelnen Wörter der Sprachansage erfasst werden.

13. Gateway nach Anspruch 12, **dadurch gekennzeichnet, dass** die Mittel zur Vornahme einer Aktion ein geändertes Routing des Verbindungsaufbaus oder der Daten der TK-Verbindung vornehmen, Signalsierungsinformationen zum Verbindungsaufbau aussenden und/oder Telekommunikations-Hardware- und/oder - Software aktivieren und/oder deaktivieren, die zum Verbindungsaufbau und/oder zur Datenübertragung zu einem gerufenen Endsystem (5, 51, 52) genutzt wird.

14. Gateway nach Anspruch 12 oder 13, **dadurch gekennzeichnet, dass** das Gateway (40) ein Mobilfunk-Gateway ist, dem eine Mehrzahl von Einsteckkarten für die Mobilkommunikation zugeordnet sind.

15. Gateway nach Anspruch 14, **dadurch gekennzeichnet, dass** das Gateway (40) Mittel zum Sperren und/oder Wechseln und/oder das Aufladen einer Einsteckkarte aufweist.

## Claims

1. Method for using voice messages in telecommunications connections, TC connections, including:
- routing a connection set-up or the data of a through-connected TC connection from a calling end system (1, 11, 12) via at least one first communication network (3, 31, 32) to a gateway (4, 40) which represents an interface between the first communication network (3, 31, 32) and a second communication network (5, 51, 52),
- routing the connection set-up or the data of the through-connected TC connection from the gateway (4, 40) via at least the second communication network (5, 51, 52) to a called end system (2, 21-24),
- detecting a typified voice message concerning the TC connection, which is provided for being transmitted to the calling end system (1, 11, 12), in the gateway (4, 40),
- evaluating the typified voice message as regards its pause-sound information, wherein a pattern recognition is effected in the sense that the length of the individual words and/or the length of the pauses between the individual words and/or the number of the individual words of the voice message are detected, and
- performing an action concerning the TC connection or the gateway (4, 40) through the gateway (4, 40) in dependence on the result of the evaluation performed.

2. The method according to claim 1, **characterized in that** the recognized pattern is compared with previously stored or configured patterns, wherein to each stored or preconfigured pattern at least one action to be performed is associated and the gateway (4, 40) performs the corresponding action in dependence on the recognized pattern.

3. The method according to any of the preceding claims, **characterized in that** the action performed by the gateway (4, 40) concerns a changed routing of the connection set-up or of the data of the TC connection.

4. The method according to any of the preceding claims, **characterized in that** the action performed by the gateway (4, 40) comprises the sending of signaling information for the connection set-up.

5. The method according to any of the preceding claims, **characterized in that** the action performed by the gateway (4, 40) comprises the activation or deactivation of telecommunication hardware and/or software which is utilized for the connection set-up and/or for the data transmission to the called end system (5, 51, 52).

6. The method according to any of the preceding claims, **characterized in that** the gateway (4, 40) blocks a forwarding of the detected voice message to the calling end system (1, 11, 12).

7. The method according to any of the preceding claims, **characterized in that** the gateway (4) is a VoIP gateway and the first communication network is an IP network (3).

8. The method according to any of claims 1 to 7, **characterized in that** the gateway (40) is a mobile radio gateway and the second communication network is a mobile radio network (51, 52), wherein the mobile radio gateway (40) includes a plurality of radio modules (41-43) for the mobile communication and to the mobile radio gateway (40) a plurality of plug-in cards (45) provided with an identification is or can be associated, which each provide for using a radio module (41-43) for the mobile communication.

9. The method according to claim 8, **characterized in that** the voice message comprises information on the status of a plug-in card (45) contained in or associated to the mobile radio gateway (40).

10. The method according to claim 8 or 9, **characterized in that** the action performed by the gateway (40) concerns the blocking of a plug-in card (45) and/or the changing of a plug-in card (45) and/or the charging of a plug-in card (45).

11. The method according to any of the preceding claims, **characterized in that** the typified voice message is generated by a telecommunication device (2) and/or by a telecommunication network (5).

12. A gateway, including:
- means for evaluating a typified voice message, which is provided for being transmitted to a calling end system (1, 11, 12), and
- means for performing an action concerning a TC connection or the gateway (4, 40) in dependence on the evaluation performed, wherein
- the means for evaluating a voice message perform a pattern recognition in the sense that the length of the individual words and/or the length of the pauses between the individual words and/or the number of the individual words of the voice message are detected.

13. The gateway according to claim 12, **characterized in that** the means for performing an action perform a changed routing of the connection set-up or of the data of the TC connection, send signaling information for the connection set-up and/or activate and/or deactivate telecommunication hardware and/or software which is used for the connection set-up and/or for the data transmission to a called end system (5, 51, 52).

14. The gateway according to claim 12 or 13, **characterized in that** the gateway (40) is a mobile radio gateway to which a plurality of plug-in cards for the mobile communication are associated.

15. The gateway according to claim 14, **characterized in that** the gateway (40) includes means for blocking and/or changing and/or charging a plug-in card.

## Revendications

1. Procédé d'utilisation de messages d'annonce dans des liaisons de télécommunication, incluant :
- acheminer un établissement de liaison, ou les données d'une liaison de télécommunication établie, à partir d'un système terminal appelant (1, 11, 12), par le biais d'au moins un premier réseau de communication (3, 31, 32), à une passerelle (4, 40) qui représente une interface entre le premier réseau de communication (3, 31, 32) et un deuxième réseau de communication (5, 51, 52),
- acheminer l'établissement de liaison, ou les données de la liaison de télécommunication établie, de la passerelle (4, 40) à un système terminal appelé (2, 21-24) par au moins le deuxième réseau de communication (5, 51, 52),
- détecter, dans la passerelle (4, 40), un message d'annonce typé concernant la liaison de télécommunication et qui est prévu pour être transmis au système terminal appelant (1, 11, 12),
- évaluer le message d'annonce typé en ce qui concerne ses informations de tonalité de pause, une détection de modèle ayant lieu dans le sens que la longueur des différents mots et/ou la longueur des pauses entre les différents mots et/ou le nombre des différents mots du message d'annonce sont détectés, et
- réaliser une action concernant la liaison de télécommunication ou la passerelle (4, 40) par le biais de la passerelle (4, 40) en fonction du résultat de l'évaluation exécutée.

2. Procédé selon la revendication 1, **caractérisé en ce que** le modèle détecté est comparé avec des modèles enregistrés ou configurés auparavant, au moins une action à exécuter étant associée à chaque modèle enregistré ou préconfiguré et la passerelle (4, 40) exécutant l'action correspondante en fonction du modèle détecté.

3. Procédé selon l'une quelconque des revendications précédentes, **caractérisé en ce que** l'action réalisée par la passerelle (4, 40) concerne un acheminement modifié de l'établissement de liaison ou des données de la liaison de télécommunication.

4. Procédé selon l'une quelconque des revendications précédentes, **caractérisé en ce que** l'action réalisée par la passerelle (4, 40) comporte l'émission d'informations de signalisation pour l'établissement de liaison.

5. Procédé selon l'une quelconque des revendications précédentes, **caractérisé en ce que** l'action réalisée par la passerelle (4, 40) comporte l'activation ou la désactivation d'éléments matériels et/ou logiciels de télécommunication qui sont utilisés pour l'établissement de la liaison et/ou la transmission de données au système terminal appelé (5, 51, 52).

6. Procédé selon l'une quelconque des revendications précédentes, **caractérisé en ce que** la passerelle (4, 40) bloque un transfert des messages d'annonce détectés au système terminal appelant (1, 11, 12).

7. Procédé selon l'une quelconque des revendications précédentes, **caractérisé en ce que** la passerelle (4) est une passerelle VoIP (Voix sur IP) et le premier réseau de communication un réseau IP (3).

8. Procédé selon l'une des revendications 1 à 7, **caractérisé en ce que** la passerelle (40) est une passerelle de téléphonie mobile et le deuxième réseau de communication un réseau de téléphonie mobile (51, 52), la passerelle de téléphonie mobile (40) comportant une pluralité de modules radioélectriques (41 à 43) pour la communication mobile et une pluralité de cartes insérables (45) qui sont dotées d'un identifiant, sont associées ou peuvent être associées à la passerelle de téléphonie mobile (40) et permettent respectivement l'utilisation d'un module radioélectrique (41 à 43) pour la communication mobile.

9. Procédé selon la revendication 8, **caractérisé en ce que** le message d'annonce comporte des informations sur l'état d'une carte insérable (45) contenue dans la passerelle de téléphonie mobile (40) ou associée à celle-ci.

10. Procédé selon l'une des revendications 8 ou 9, **caractérisé en ce que** l'action réalisée par la passerelle (40) concerne le blocage d'une carte insérable (45) et/ou le changement d'une carte insérable (45) et/ou le chargement d'une carte insérable (45).

11. Procédé selon l'une quelconque des revendications précédentes, **caractérisé en ce que** le message d'annonce typé est généré par un appareil de télécommunication (2) et/ou un réseau de télécommunication (5).

12. Passerelle comportant :
- un moyen pour évaluer un message d'annonce typé qui est prévu pour être communiqué à un système terminal appelant (1, 11, 12), et
- un moyen pour réaliser une action concernant une liaison de télécommunication ou la passerelle (4, 40) en fonction de l'évaluation exécutée,
- le moyen d'évaluation d'un message d'annonce réalisant une détection de modèle dans le sens que la longueur des différents mots et/ou la longueur des pauses entre les différents mots et/ou le nombre des différents mots du message d'annonce sont détectés.

13. Passerelle selon la revendication 12, **caractérisée en ce que** le moyen de réalisation d'une action effectue un acheminement modifié de l'établissement de liaison ou des données de la liaison de télécommunication, émet des informations de signalisation pour l'établissement de liaison et/ou active et/ou désactive des éléments matériels et/ou logiciels de télécommunication qui sont utilisés pour l'établissement de liaison et/ou pour la transmission de données à un système terminal appelé (5, 51, 52).

14. Passerelle selon la revendication 12 ou 13, **caractérisée en ce que** la passerelle (40) est une passerelle de téléphonie mobile à laquelle une pluralité de cartes insérables sont associées pour la communication mobile.

15. Passerelle selon la revendication 14, **caractérisée en ce que** la passerelle (40) comporte un moyen pour bloquer et/ou changer et/ou charger une carte insérable.
